# EUROPEAN PATENT APPLICATION

(11) **EP 4 807 881 A1**
(43) Date of publication of application: **16.09.2026**
(21) Application number: 25867220.3
(22) Date of filing: 28.11.2025
(51) Int. Cl.: H01M 50/383, H01M 50/367, H01M 10/6556, H01M 50/249, H01M 10/613, H01M 10/625

(54) **BATTERY PACK AND VEHICLE COMPRISING SAME**

(30) Priority: 10.01.2025 KR 20250003794
(71) Applicant: LG ENERGY SOLUTION, LTD., Seoul 07335 (KR)
(72) Inventor: JANG, Sunghwan, Daejeon 34122 (KR); KIM, Gwan Woo, Daejeon 34122 (KR); LEE, Hyunjae, Daejeon 34122 (KR)
(74) Representative: Plasseraud IP
(86) International application number: PCT/KR2025/020102
(87) International publication number: WO 2026/151070

(57) **Abstract**

A battery pack according to an embodiment of the present disclosure includes: a pack case having a vent hole formed therein; a filtering path communicating with the vent hole and configured to guide gas, the filtering path having a filter unit for capturing solid particles generated during thermal propagation; and a cooling path for cooling the gas and the solid particles.

## Description

### [TECHNICAL FIELD]

The present disclosure relates to a battery pack and a vehicle comprising the same. More specifically, the present disclosure relates to a battery pack capable of suppressing external transfer of flame during thermal propagation of a battery and a vehicle including the same.

### [BACKGROUND ART]

Unlike non-rechargeable primary batteries, secondary batteries are batteries that can be charged and discharged, and they are applied not only to portable devices but also to vehicles driven by an electric drive source, such as electric vehicles (EVs) and hybrid electric vehicles (HEVs).

Types of secondary batteries currently in widespread use include lithium-ion batteries, lithium-polymer batteries, nickel-cadmium batteries, nickel-metal hydride batteries, and nickel-zinc batteries. The operating voltage of such a unit secondary battery cell, that is, a unit battery cell, is about 2.5 V to 4.6 V. Therefore, when a higher output voltage is required, a battery pack is formed by connecting a plurality of battery cells in series. In addition, depending on the charge/discharge capacity required for the battery pack, a plurality of battery cells may be connected in parallel to configure the battery pack. Accordingly, the number of battery cells included in the battery pack may be variously determined depending on the required output voltage or charge/discharge capacity.

When a plurality of battery cells are connected in series and/or in parallel to form a battery pack, it is common to first configure a battery module consisting of at least one, preferably a plurality of battery cell, and then to use at least one such battery module together with additional components to configure the battery pack. Here, a battery module means a component in which a plurality of battery cells are connected in series and/or in parallel, and a battery pack means a component in which a plurality of battery modules are connected in series and/or in parallel to increase capacity and output.

Meanwhile, there is a growing need to satisfy high-speed charging of battery packs and thermal propagation safety due to customer needs. A battery pack having a cooling path has been proposed to suppress thermal propagation, but the cooling path can control a risk factor such as an internal temperature of the battery pack during thermal propagation only to some extent, and has a limitation in that it cannot effectively suppress transfer of flame caused by solid particles generated during thermal propagation being released to the outside of the battery pack.

### [SUMMARY OF THE INVENTION]

### [TECHNICAL PROBLEM]

Accordingly, an objective of the present disclosure is to provide a battery pack capable of suppressing external transfer of flame during thermal propagation of a battery and a vehicle including the same.

However, the technical problems to be solved by the present disclosure are not limited to those set forth above, and other problems not expressly mentioned will be clearly understood by those of ordinary skill in the art from the following description.

### [SOLUTION TO THE PROBLEM]

In order to achieve the above-described objective, a battery pack according to an embodiment of the present disclosure includes: a pack case having a vent hole formed therein; a filtering path communicating with the vent hole and configured to guide gas, the filtering path having a filter unit for capturing solid particles generated during thermal propagation; and a cooling path for cooling the gas and the solid particles.

The filter unit may have a bottleneck structure that restricts passage of the solid particles.

The cooling path may include a cooling pipe disposed adjacent to the filtering path to block flow of the solid particles, and an outer wall of the cooling pipe and an inner wall of the filtering path may form the bottleneck structure.

The filtering path may guide the gas in a first direction during thermal propagation of the battery, and the cooling pipe may be disposed perpendicular to the first direction.

The filtering path may include a recessed portion recessed toward the outside of the battery pack, and each of a plurality of the cooling pipes may be seated in at least one recessed portion.

The plurality of cooling pipes may be aligned parallel to each other and may intersect perpendicularly with the filtering path.

The recessed portion may be formed to be recessed downward on an inner bottom surface of the pack case.

The recessed portion may be formed to be recessed upward on an inner upper surface of the pack case.

The pack case may include a lower housing having an open upper portion and a pack cover covering an open upper surface of the lower housing, and the recessed portion may be formed in the pack cover.

The vent hole may be perforated in a side surface of the pack case.

A plurality of vent holes may be perforated in the pack case.

The present disclosure provides a vehicle including at least one battery pack described above.

### [ADVANTAGEOUS EFFECTS OF THE INVENTION]

According to the present disclosure, a battery pack capable of suppressing external transfer of flame during thermal propagation of a battery and a vehicle including the same are provided.

### [BRIEF DESCRIPTION OF DRAWINGS]

The accompanying drawings illustrate preferred embodiments of the present disclosure and, together with the detailed description of the disclosure below, serve to provide a further understanding of the technical spirit of the present disclosure. Therefore, the present disclosure should not be construed as being limited to the matters described in the drawings.
FIG. 1 is a perspective view illustrating an inside of a battery pack according to an embodiment of the present disclosure.
FIG. 2 is a cross-sectional view illustrating the battery pack according to an embodiment of the present disclosure taken along plane A-A'.
FIG. 3 illustrates flows of gas and solid particles during thermal propagation of a battery pack according to an embodiment of the present disclosure.
FIG. 4 is a partially enlarged view of FIG. 3.
FIG. 5 illustrates a cooling path of a battery pack according to an embodiment of the present disclosure.
FIG. 6 illustrates a state in which gas is discharged from a pack case of a battery pack according to an embodiment of the present disclosure.
FIG. 7 illustrates a vehicle according to an embodiment of the present disclosure.

### [MODES FOR CARRYING OUT THE INVENTION]

Advantages and features of the present disclosure, and methods for achieving them will become apparent with reference to embodiments described below in detail in conjunction with the accompanying drawings. However, the present invention is not limited to the embodiments disclosed below, but may be implemented in various other forms. The embodiments are provided merely to ensure a complete disclosure of the present invention and to fully inform those skilled in the art of the scope of the invention. The present invention is defined only by the scope of the appended claims. Therefore, in some embodiments, well-known process steps, well-known device structures, and well-known technologies are not described in detail in order to avoid obscuring the present disclosure. Throughout the specification, the same reference numerals refer to the same elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "immediately below" another element, it is to be understood that no other elements are interposed therebetween.

The battery pack of the present disclosure includes a pack case having a vent hole formed therein, a filtering path, and a cooling path for cooling gas. The filtering path has a filter unit that captures solid particles generated during thermal propagation, and is communicated with the vent hole to guide gas. The present disclosure can prevent the solid particles from being emitted to the outside of the pack case and transferring flame to the outside.

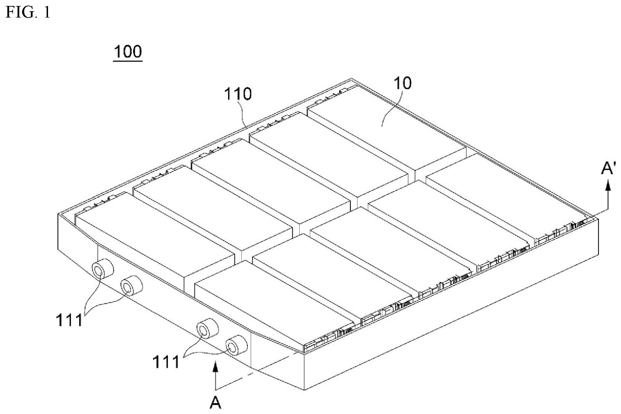

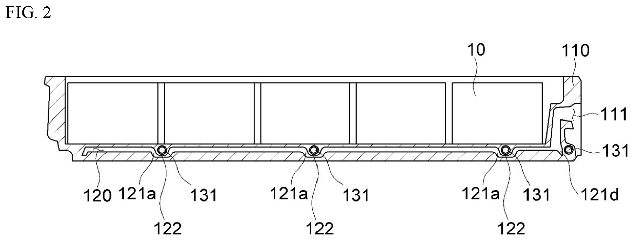

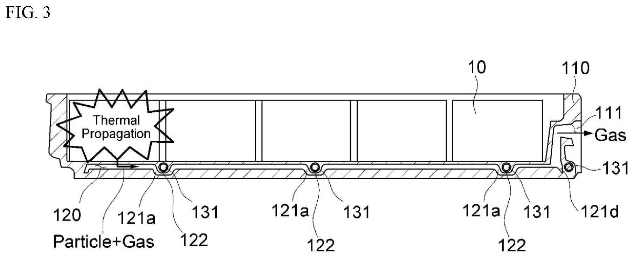

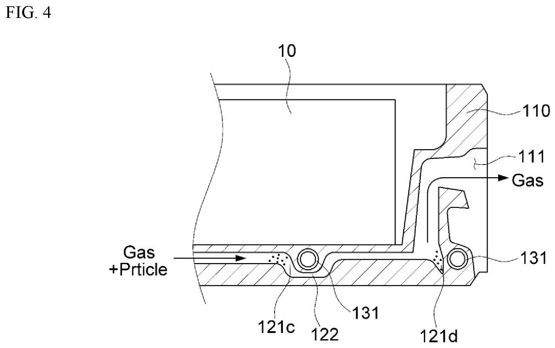

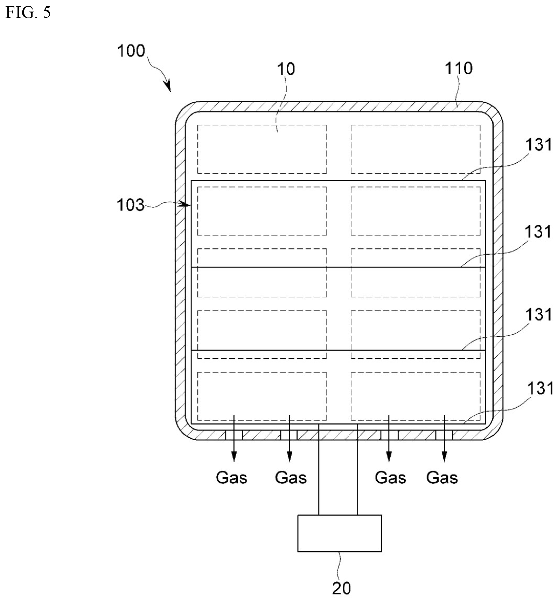

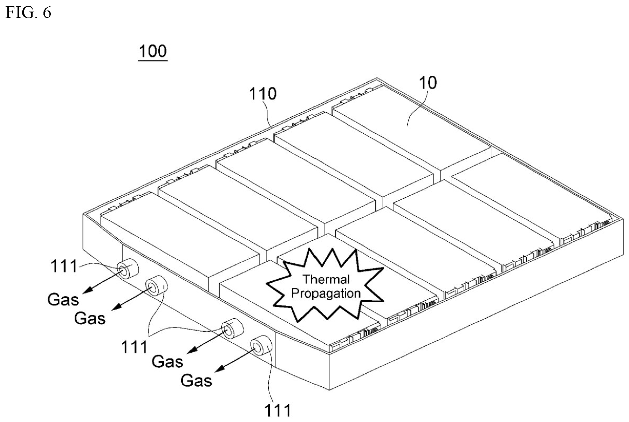

Hereinafter, a battery pack 100 according to an embodiment of the present disclosure will be described in detail with reference to the drawings. FIG. 1 is a perspective view illustrating an inside of a battery pack 100 according to an embodiment of the present disclosure. FIG. 2 is a cross-sectional view illustrating the battery pack 100 according to an embodiment of the present disclosure taken along plane A-A'. FIG. 3 illustrates flows of gas and solid particles during thermal propagation of a battery pack 100 according to an embodiment of the present disclosure. FIG. 4 is a partially enlarged view of FIG. 3. FIG. 5 illustrates a cooling path 130 of a battery pack 100 according to an embodiment of the present disclosure. FIG. 6 illustrates a state in which gas is discharged from a pack case 110 of a battery pack 100 according to an embodiment of the present disclosure.

Referring to FIGS. 1 to 6, the battery pack 100 of the present disclosure includes a pack case 110, a filtering path 120, and a cooling path 130.

The pack case 110 accommodates battery cells 10. The pack case 110 may have a substantially rectangular parallelepiped shape. A plurality of battery cells 10 may be accommodated in the pack case 110. A plurality of electrode assemblies may be accommodated inside each battery cell 10. Each battery cell 10 may have a cell vent communicated with the filtering path 120.

In the illustrated embodiment, the pack case 110 accommodates the battery cells 10, but the pack case 110 of the present disclosure is sufficient as long as it is a housing for supporting and protecting electrodes of a secondary battery, and does not necessarily have to primarily accommodate the battery cells 10. For example, the pack case 110 of the present disclosure may accommodate a battery module instead of the battery cells 10, or may accommodate both the battery cells 10 and a battery module accommodating the battery cells.

In addition, although the battery cell 10 is illustrated as a prismatic battery cell 10 having a substantially rectangular parallelepiped shape in the illustrated embodiment, the type of the battery cell 10 is not limited thereto. The battery cell 10 may be, for example, a cylindrical battery cell or a pouch-type battery cell.

The pack case 110 may include a lower housing having an open upper portion and a pack cover covering an open upper surface of the lower housing. In FIGS. 1 to 5, the pack cover is omitted for convenience of description of an internal structure of the pack case 110. However, the structure of the pack case 110 is not limited to this embodiment. The pack case 110 may have, for example, a closed upper surface and openable side surfaces.

A vent hole 111 is formed in the pack case 110. Gas generated inside the pack case 110 during thermal propagation of the battery may be discharged to the outside of the pack case 110 through the vent hole 111. The vent hole 111 may be formed in a side surface of the pack case 110. A plurality of vent holes 111 may be formed in the side surface of the pack case 110. In an embodiment, four vent holes 111 are formed in the side surface of the pack case 110. However, the position or number of the vent holes 111 is not limited to this embodiment. For example, a single vent hole 111 may be formed in an upper surface of the pack case 110.

Referring to FIGS. 2 to 4, the filtering path 120 has filter units 121a, 121b, 121c, and 121d for capturing solid particles generated during thermal propagation, and is communicated with the vent hole 111 to guide gas. Solid particles generated during thermal propagation may be captured inside the pack case 110 by the filtering path 120, and only gas may be discharged to the outside of the pack case 110 through the vent hole 111. The filter units 121a, 121b, 121c, and 121d may have a bottleneck structure that restricts passage of the solid particles.

The cooling path 130 is configured to cool gas and solid particles generated during thermal propagation. The cooling path 130 may include a cooling pipe 131 disposed adjacent to the filtering path 120 to block flow of the solid particles. Here, an outer wall of the cooling pipe 131 and an inner wall of the filtering path 120 may form a bottleneck structure. The filtering path 120 may be arranged to guide gas in a first direction during thermal propagation of the battery, and the cooling pipe 131 may be arranged perpendicular to the first direction. That is, at a point where the cooling pipe 131 and the filtering path 120 intersect, the cooling pipe 131 and the filtering path 120 form the filter units 121a, 121b, 121c, and 121d of a bottleneck structure. A plurality of cooling pipes 131 may be aligned parallel to each other and may intersect perpendicularly with the filtering path 120. In an embodiment, four cooling pipes 131 placed perpendicular to the first direction may be provided. However, the structure of the cooling path 130 is not limited to this embodiment. The cooling path 130 may have, for example, a ring shape.

In the illustrated embodiment, the cooling pipe 131 of the cooling path 130 is embedded in the pack case 110, but alternatively, the cooling pipe 131 may be configured to be exposed on the filtering path 120 without being embedded in the pack case 110.

Referring to FIGS. 3 and 4, when thermal propagation occurs in a battery cell 10 near a side opposite to a side of the pack case 110 where the vent hole 111 is formed, solid particles and gas emitted from the battery cell 10 flow into the filtering path 120, and while the gas continues to proceed toward the vent hole 111, the solid particles are blocked from proceeding by the bottleneck structure of the filter units 121a, 121b, 121c, and 121d and remain inside the pack case 110. Accordingly, flame transfer due to release of the solid particles to the outside of the pack case 110 can be prevented. Unlike the drawings, bottleneck sections of the respective filter units 121a, 121b, 121c, and 121d may have different areas. For example, an area of the bottleneck section may decrease toward the vent hole 111 in order to capture particles of smaller sizes as they go toward the vent hole 111.

Unlike the case of FIG. 3, at least one filter unit 121d may be placed between the battery cell 10 closest to the vent hole 111 and the vent hole 111 so that the solid particles can be captured even when thermal propagation occurs in the battery cell 10 adjacent to the vent hole 111.

The filtering path 120 may include a recessed portion 122 recessed toward the outside of the battery pack 100, and each of a plurality of cooling pipes 131 may be seated in at least one recessed portion 122. Gas generated during thermal propagation flows between the recessed portion 122 and the cooling pipe 131, and flow of the solid particles is blocked by a bottleneck structure formed by the recessed portion 122 and the cooling pipe 131. The recessed portion 122 may be formed to be recessed in an inner bottom surface of the pack case 110 as in the illustrated embodiment. However, the structure of the filtering path 120 is not limited to this embodiment. The recessed portion 122 may be formed to be recessed upward on, for example, an inner upper surface of the pack case 110 (when a pack cover covering an upper surface of a lower housing exists, the inner upper surface of the pack case 110 refers to an inner surface of the pack cover). A formation position of the recessed portion 122 may be determined depending on whether the solid particles have a property of rising upward or sinking downward inside the pack case 110.

An external refrigerant circulation device 20 may be connected to the cooling path 130 to circulate a refrigerant inside the cooling path 130.

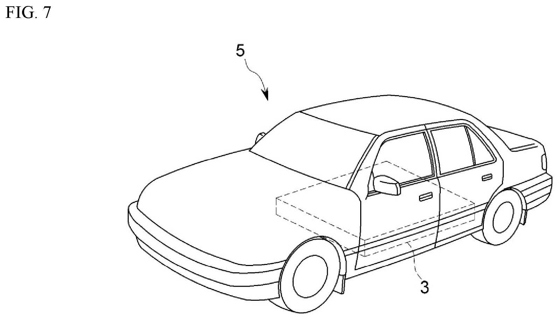

FIG. 7 illustrates a vehicle according to an embodiment of the present disclosure. A vehicle 5 according to an embodiment of the present disclosure includes at least one battery pack 3 described above.

Meanwhile, although terms indicating directions such as "up" and "down" are used in the present specification, these terms are only for convenience of description, and it is apparent to those skilled in the art that they may vary depending on a position of a target object or a position of an observer.

Although the present disclosure has been described with reference to limited embodiments and drawings, the present disclosure is not limited thereto, and it is obvious that various modifications and variations can be made by those skilled in the art to which the present disclosure pertains within the technical spirit of the present disclosure and the equivalent scope of the claims described below.

### [REFERENCE NUMERALS]

3: Vehicle
5,100: Battery Pack
10: Battery Cell
110: Pack Case
111: Vent Hole
120: Filtering Path
121a, 121b, 121c, 121d: Filter Unit
122: Recessed Portion
130: Cooling Path
131: Cooling Pipe

## Claims

1. A battery pack comprising: a pack case having a vent hole formed therein;
a filtering path communicating with the vent hole and configured to guide gas, the filtering path having a filter unit for capturing solid particles generated during thermal propagation; and
a cooling path for cooling the gas and
the solid particles.

2. The battery pack of claim 1, wherein
the filter unit has a bottleneck structure limiting passage of the solid particles.

3. The battery pack of claim 2, wherein
the cooling path includes a cooling pipe disposed adjacent to the filtering path to block flow of the solid particles, and
an outer wall of the cooling pipe and an inner wall of the filtering path form the bottleneck structure.

4. The battery pack of claim 3, wherein
the filtering path guides the gas in a first direction during thermal propagation of a battery, and
the cooling pipe is disposed perpendicular to the first direction.

5. The battery pack of claim 4, wherein
the filtering path includes a recessed portion recessed toward an outside of the battery pack, and
each of a plurality of the cooling pipes is seated in at least one recessed portion.

6. The battery pack of claim 5, wherein
the plurality of cooling pipes are aligned parallel to each other, and
intersect perpendicularly with the filtering path.

7. The battery pack of claim 5, wherein
the recessed portion is formed to be recessed downward on an inner bottom surface of the pack case.

8. The battery pack of claim 5, wherein
the recessed portion is formed to be recessed upward on an inner upper surface of the pack case.

9. The battery pack of claim 8, wherein
the pack case includes a lower housing having an open upper portion and a pack cover covering an open upper surface of the lower housing, and
the recessed portion is formed in the pack cover.

10. The battery pack of claim 5, wherein
the vent hole is perforated in a side surface of the pack case.

11. The battery pack of claim 10, wherein
a plurality of the vent holes are perforated in the pack case.

12. A vehicle comprising at least one battery pack according to any one of claims 1 to 11.
